# EUROPÄISCHE PATENTSCHRIFT

(11) **EP 0 603 501 B1**
(45) Veröffentlichungstag und Bekanntmachung des Hinweises auf die Patenterteilung: **19.03.1997**
(21) Anmeldenummer: 93117531.9
(22) Anmeldetag: 29.10.1993
(51) Int. Cl.: B42C 7/00

(54) **Buchdeckenmaschine**
Machine for manufacturing book covers
Machine à fabriquer des couvertures de livres

(30) Priorität: 17.03.1993 DE 4308469; 09.12.1992 DE 4241387
(43) Veröffentlichungstag der Anmeldung: 29.06.1994
(73) Patentinhaber: Kolbus GmbH & Co. KG, D-32369 Rahden (DE)
(72) Erfinder: Rathert, Horst, D-32425 Minden (DE); Voss, Reimer, D-49191 Belm (DE)

(56) Entgegenhaltungen:
- DE-A- 1 436 088
- E. BENDIG ET AL. 'Lehrbuch der industriellen Buchbinderei' 1990 , VERLAG BERUF + SCHULE , ITZEHOE, DE Kapitel 8.4.2. 'Maschinelle Fertigung von Buchdecken' * Abbildungen 8.33-8.35 * * Seite 321, Zeile 1 - Seite 324, Zeile 5 *
- G.M.L. WORTEL ET AL. 'Brocheren en uitgaafbinden' 1991 , GOC-UITGEVERIJ / GAADE UITGEVERS , AMSTERDAM / HOUTEN Bind- en afwerkingstechniek Vol. 2 Kapitel 8 'Boekbandvervaardiging' * Abbildungen 8.6,8.12,8.13 *

## Beschreibung

Die Erfindung bezieht sich auf eine Buchdeckenmaschine gemäß dem Oberbegriff des Patentanspruchs 1.

Buchdecken bestehen bekanntlich aus einem Bezugsmaterial, aus den beiden Deckenpappen und aus einer zwischen diesen angeordneten Rückenpappe, dem sogenannten Schrenz. Die Pappen sind mit dem Überzugsmaterial ganzflächig verklebt und das über die Pappen hinausstehende Bezugsmaterial ist an allen vier Seiten eingeschlagen. In der industriellen Buchdeckenherstellung übernehmen Buchdeckenmaschinen die Arbeitsgänge.

In einer bekannten Maschine wird das zugeschnittene Bezugsmaterial, der sogenannte Deckennutzen, aus einem Stapelmagazin vereinzelt und über einen Nutzenzylinder einer Leimwalze Zugeführt. Ein Ziehbalken übernimmt den beleimten Deckennutzen und legt ihn auf dem Deckentisch ab. Auf der dem Stapelmagazin für das Bezugsmaterial gegenüberliegenden Seite schieben Transporteure die zugeschnittenen Deckenpappen aus Magazinen auf einen Bereitstellungsplatz und gleichzeitig wird eine von Rolle abgelängte Rückenpappe zugeführt.

Die beiden Deckenpappen und die Rückenpappe werden von einem Saugkopf eines Doppelsaugarmes aufgenommen und nach einer Drehung des Saugarmes von 180° mit den auf dem Deckentisch liegenden beleimten Nutzen zusammengeführt.

Deckentisch und Doppelsaugarm bewegen sich mit dem Deckennutzen und den Deckelpappen in zwei Stufen abwärts, wobei in einer ersten Stufe die überstehenden Ränder des Deckennutzens auf der sogenannten Kopf- und Fußseite der Buchdecke von einem Einschlagleistenpaar aufgerichtet und eingeschlagen sowie die Ecken von mitgeführten Werkzeugen eingezogen werden. In einer zweiten Stufe erfolgte das Aufrichten und Einschlagen der seitlichen Einschläge ebenfalls durch Einschlagleisten.

Gleichzeitig mit der Abwärtsbewegung des Doppelsaugarmes in die zweite Stufe nimmt ein zweiter Saugkopf auf der gegenüberliegenden Seite aus den Magazinen vereinzelte neue Deckelpappen auf und fährt danach in seine obere Ausgangsstellung zurück.

Der Deckentisch macht schließlich mit der fertigen Decke eine Abwärtsbewegung in eine dritte Stufe, in der ein Transportmittel die Decke erfaßt und einer Preßvorrichtung zuführt und der Deckentisch fährt ebenfalls in seine Ausgangsstellung zur Übernahme eines folgenden Deckennutzens zurück.

Die Aufgabe der Erfindung besteht darin, eine Buchdeckenmaschine der gattungsgemäßen Art zu schaffen, auf der unter Beibehaltung einer kompakten Bauweise Buchdecken von höherer Qualität mit einer wesentlichen Steigerung der Arbeitsgeschwindigkeit hergestellt werden können.

Diese Aufgabe wird durch die Merkmale des Kennzeichnungsteils des Patentanspruchs 1 gelöst. Vorteilhafte Ausgestaltungen der Erfindung ergeben sich aus den Unteransprüchen.

Durch die der Erfindung zugrundeliegenden Erkenntnis, die Funktionen Zusammenfügen von Deckenbezug und Deckenpappen, Kopf- und Fußeinschlag, Seiteneinschläge einschließlich der Materialtransportbewegungen nicht wie bisher innerhalb eines Maschinentaktes nacheinander auszuführen, sondern auf mehrere Takte zu verteilen, derart, daß alle Funktionen innerhalb eines Taktes gleichzeitig an verschiedenen Buchdecken erfolgen, jedoch unter Beibehaltung des in zwei Vertikalebenen operierenden Einschlagsystems läßt sich einerseits die Laufgeschwindigkeit der Buchdeckenmaschine wesentlich steigern und andererseits steht durch den kurzen Transportweg zwischen den Stationen für das Umlegen der Kopf- und Fußeinschläge und für die Seiteneinschläge eine relativ lange Anpreßzeit für das Abbinden des Leimes zur Verfügung, was zu einer Qualitätssteigerung der Buchdecken hinsichtlich fester Einschläge und Ecken führt. Aus dem Zeitgewinn für die einzelnen Bewegungsabläufe resultiert insgesamt ein ruhigerer Maschinenlauf und letztlich weist die Buchdeckenmaschine nach der Erfindung eine kompakte Bauweise auf.

Die Erfindung wird nachstehend anhand der Zeichnung näher erläutert. Es zeigen:

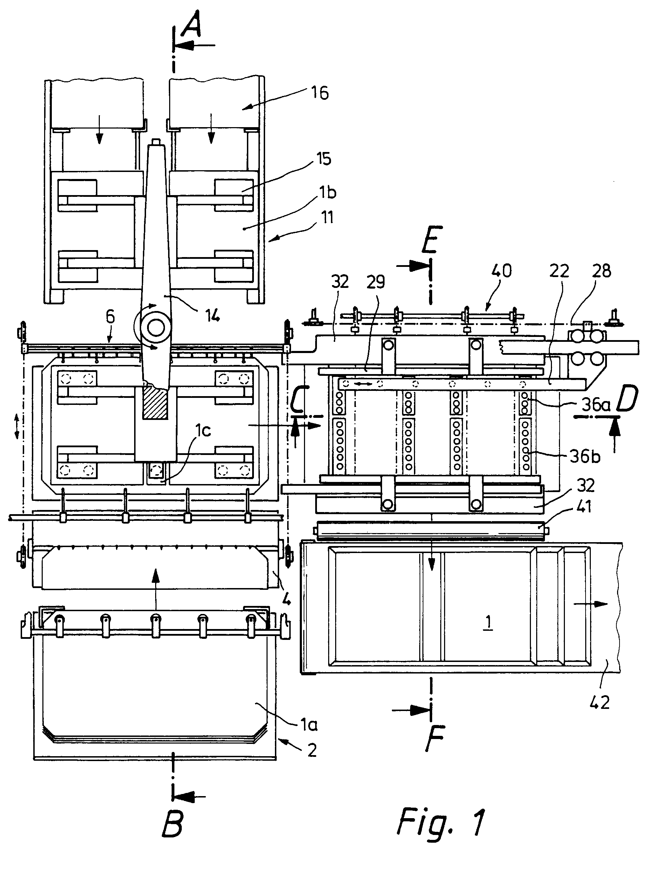

- Fig. 1: ein erstes Ausführungsbeispiel einer Buchdeckenmaschine in einer Draufsicht;

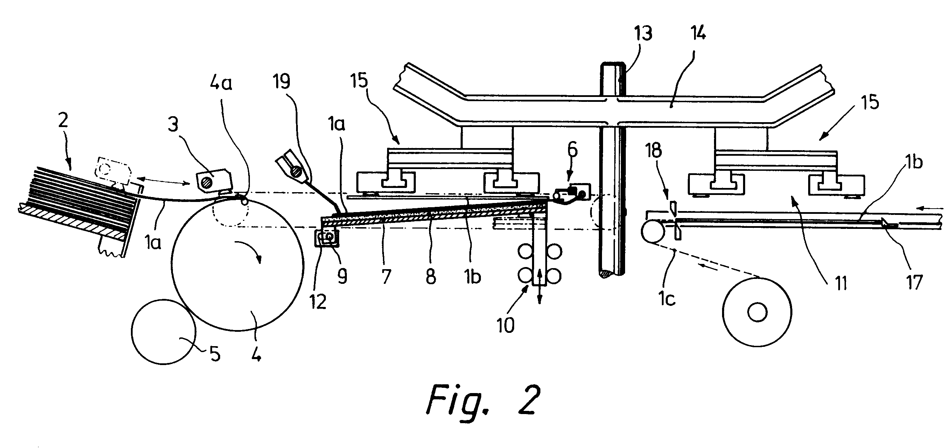

- Fig. 2: einen Schnitt durch die Darstellung gemäß der Linie A-B;

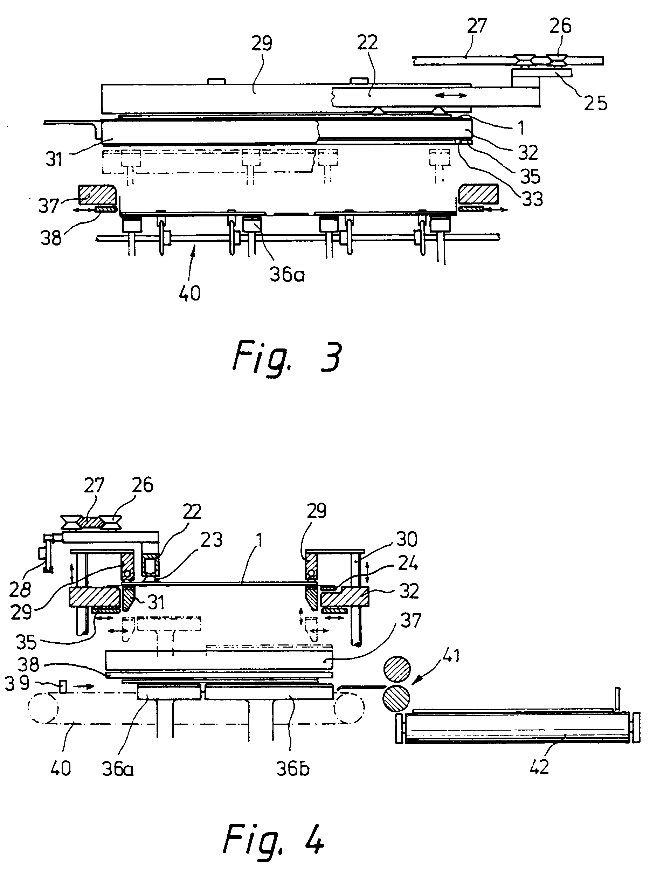

- Fig. 3: einen Schnitt durch die Darstellung gemäß der Linie C-D;
- Fig. 4: einen Schnitt durch die Darstellung gemäß der Linie E-F;

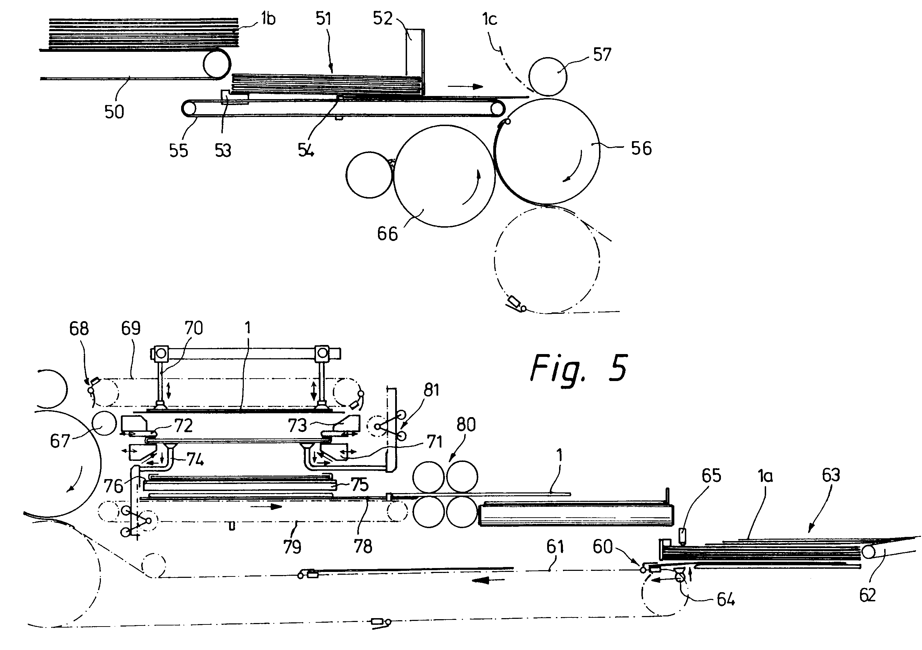

- Fig. 5: ein zweites Ausführungsbeispiel einer Buchdeckenmaschine in einer Seitenansicht.

In der Buchdeckenmaschine gemäß dem ersten Ausführungsbeispiel wird in bekannter Weise das Überzugsmaterial 1a, im folgenden als Nutzen bezeichnet, aus einem Magazin 2 einer Anlegestation durch Sauger 3 entnommen und einem Nutzenzylinder 4 zugeführt, der einen Nutzen 1a mit seinen Greifern 4a im Stillstand erfaßt und an einer Leimwalze 5 vorbeiführt. Nach ausgeführtem vollflächigen Beleimen übernimmt ein gradlinig vor- und zurückfahrbarer Greiferbalken 6 den beleimten Nutzen 1a im Stillstand vom Nutzenzylinder 4 und legt ihn auf einem Deckentisch 7 ab. Dieser ist mit einer Auflage 8 aus einem elastischen Material beschichtet und läßt sich um eine Horizontalachse 9, auf der der Deckentisch über ein Langloch 12 gelagert ist, zwischen einer unteren und einer oberen Endstellung verschwenken, wozu der Deckentisch 7 auf der freien Seite mit einem Ausleger 10 in einer Rollenbahn geführt und über nicht dargestellte Antriebsmittel betätigt wird.

Zwischen dem Deckentisch 7 und einem Bereitstellungsplatz 11 für die Deckenpappen, bestehend aus den beiden Seitenteilen 1b sowie der Rückeneinlage 1c, auch Schrenz genannt, befindet sich ein um eine Vertikalachse 13 drehbarer sowie in Vertikalebene auf und ab bewegbarer Transportarm 14.

Aus Magazinen 16 auf der dem Nutzenmagazin gegenüberliegenden Seite werden die beiden Deckenpappen 1b von Transporteuren 17 in den Bereitstellungsplatz 11 befördert, während die Rückeneinlage 1c von der Rolle zugeführt und mittels eines Schneidwerkes 18 abgelängt wird.

Der zwischen dem Bereitstellungsplatz 11 und dem Deckentisch 7 durch Drehbewegung verfahrbarer Transportarm 14 nimmt über die Saugplattenanordnung 15 die bereitgestellten Pappen 1b und 1c auf und führt diese dem Deckentisch 7 zu, der sich in einer zu den Pappen 1b und 1c schräg verlaufenden Übernahmestellung befindet. Nach Beendigung der Drehbewegung senkt sich der Transportarm 14 und die von der Saugplattenanordnung 15 gehaltenen Pappen 1b und 1c werden mit dem Nutzen 1a zunächst an der Kopfeinschlagseite in Kontakt gebracht. Durch Abschwenkbewegung des Deckentisches 7 in die untere Endstellung in zeitlicher Übereinstimmung mit der weiteren Absenkbewegung des Transportarmes 14 nimmt der von den Pappen 1b und 1c und dem auf dem Deckentisch 7 aufliegenden Nutzen 1a eingeschlossene Winkel fortschreitend ab, dabei wandert die Kontaktlinie von der Kopfseite der Decke 1 zur Fußseite. Es ergibt sich somit ein Anwalzen des Nutzens 1a an die Pappen 1b und 1c. Unmittelbar vor Beendigung des Vortransportes des Nutzens 1a auf den Deckentisch 7 mittels des Greiferbalkens 6 drücken Niederhaltefinger 19 den Nutzen 1a im Bereich des Fußeinschlags gegen den Deckentisch 7, was zum Straffhalten des Nutzens führt. Unter Vermeidung von Lufteinschlüssen werden somit die Pappen 1b und 1c und das Überzugsmaterial 1a passergenau zusammengefügt.

Erfindungsgemäß befindet sich getrennt von der Station zum Zusammenfügen von Pappen 1b, 1c und Nutzen 1a eine Einschlagstation mit in vertikal versetzten Ebenen angeordneten Einschlagelementen zum Ausführen der Kopf- und Fußeinschläge in einer ersten Ebene und zum Ausführen der Seiteneinschläge in einer zweiten Ebene. Dabei sind die Funktionen Zusammenfügen von Deckennutzen 1a und Deckenpappen 1b, Kopf- und Fußeinschlag sowie Seiteneinschlag derart aufeinander abgestimmt, daß alle Funktionen innerhalb eines Taktes gleichzeitig an verschiedenen Buchdecken erfolgen, so daß für jeden Vorgang einschließlich der Transportbewegung ein Maschinentakt zur Verfügung steht.

Eine Transporteinrichtung in Form einer Saugleiste 22 mit daran über die Deckenlänge verteilten, abständig zueinander positionierten Saugern 23 erfaßt die aus den Pappen 1b, 1c und Nutzen 1a zusammengefügte Decke 1 einseitig auf ihrer ganzen Seitenlänge, um sie gestreckt der Einschlagstation zuzuführen. Dabei wird die Decke 1 auf der den Saugern 23 gegenüberliegenden Seite durch eine in die Bewegungsbahn und zurück steuerbare Stützschiene 24 unterfangen.

Die Saugleiste 22 mit den Saugern 23 befindet sich an einem Wagen 25 mit auf eine Führungsbahn 27 greifenden Laufrollen 26 und wird von einem Antriebssystem 28 hin- und hergehend verfahren.

In der Endposition der Einschlagstation übernehmen in der Zufuhrebene Saugschienen 29 die Decke 1 in den seitennahen Bereichen. Die Saugschienen 29 lassen sich über vertikale Führungsstangen 30 gemäß Pfeilrichtung höhen verfahren und können somit die Decke 1 gegen Druckschienen 31 drücken nach Zurückbewegen der Stützschiene 24 durch einen geringfügigen Abwärtshub. In einer abgewandelten Ausführung können die Druckschienen 31 auch unterhalb der Einschlagschiene 35 verbleiben und die Saugschienen 29 übernehmen den Vertikaltransport.

Die Abwärtsbewegung erfolgt bis in eine Position, in der sich die Oberkante der Deckenpappen 1b und 1c unterhalb der Einschlagschienen 35 befindet. In dieser Position fahren die Einschlagschienen 35 gemäß Pfeilrichtung einwärts, die Saugschienen 29 heben ab und die Druckschienen 31 drücken die Decke zum Erreichen eines strammen Einschlags gegen die sich noch einwärts bewegenden Einschlagschienen 35. Gleichzeitig mit dem Einschlagen erfolgt das Einziehen der Ecken über Eckeneinziehelemente 33, die von den Einschlagschienen 35 geführt sind. Die Druckschienen 31 lösen sich von der Decke und bewegen sich gemäß Pfeilrichtung auswärts, um der Decke 1 für eine weitere Abwärtsbewegung in die sich darunter befindliche Seiteneinschlagstation den Weg frei zu geben.

Hierzu erfolgt eine Übernahme der Decke 1 in der Ebene des Kopf- und Fußeinschlags durch höhenverfahrbare erste Teilstücke 36a von parallel über die Deckenlänge verteilt angeordneten Saugleisten, die die Decke 1 zunächst auf eine Zwischenebene verbringen, in der zweite höhenverfahrbare Teilstücke 36b die Decke 1 übernehmen, um sie gemeinsam mit den ersten Teilstücken 36a bis in die Ebene, in der die Seiteneinschläge ausgeführt werden, abzusenken. Auf dem Weg von der Zwischenebene zur Ebene für die Seiteneinschläge erfolgt das Aufrichten der seitlichen Überstände der Decke 1 an Aufrichtschienen 37.

Das Umlegen der Seiteneinschläge vollzieht sich in bekannter Weise durch Einwärtsfahren von Seiteneinschlagschienen 38 unter Ausübung eines Anpreßdruckes durch die Saugleisten 36a, 36b.

Nach dem Umlegen der Seiteneinschläge senken sich die Saugleisten 36a, 36b und legen die Decke 1 auf ein Transportsystem 39, 40 ab zum Abtransport der Decke 1 durch Transporteure 39 einer Ausfuhrkette 40 in ein nachgeordnetes Andrückwalzenpaar 41 sowie auf ein sich daran anschließendes Ausfuhrband 42.

In der Buchdeckenmaschine gemäß dem zweiten Ausführungsbeispiel werden Deckenpappen 1b auf einem Pappenvorstapelband 50 angelegt und automatisch in ein Pappenmagazin 51 verbracht, in dem die Vorderkante, gebildet von Anschlägen 52 mit Durchlaßleistenfunktion, verstellbar ist. Im Pappenmagazin 51 werden die Pappen 1b durch einen Kurzhubschieber 53 vereinzelt und vor Transporteure 54 an seitlichen Zahnriemen 55 gelegt. Dazu läuft der Schieber 53 leicht schräg nach unten. Der Rückhub erfolgt sofort, wodurch eine Stapelentlastung stattfindet. Die Eingriffshöhe der Transporteure 54 wird durch Höheneinstellungen nicht dargestellter Führungsschienen justiert. Die Zahnriemen laufen kontinuierlich mit Taktgeschwindigkeit und übergeben die Pappen 1b synchron an einen Nutzenzylinder 56 mit einer Oberwalze 57. Zur Justierung auf Formathöhe erfolgt eine Taktverstellung des gesamten Pappentransportantriebs und eine Verstellung der Anschläge 52. Synchron mit der Pappenzufuhr kann eine Rückeneinlage 1c von einer nicht dargestellten Abzugseinrichtung kommend abgelängt und zugeführt werden.

Auf der der Pappenzufuhr gegenüberliegenden Seite erfolgt die Zufuhr der Deckenbezüge 1a, nachfolgend wiederum als Nutzen bezeichnet, und zwar durch umlaufende Greiferbalken 60 eines Kettensystems 61 unmittelbar an den Nutzenzylinder 56. Die Nutzen 1a gelangen z. B. in Form einer Schuppe von einem Vorstapelband 62 in ein Nutzenmagazin 63, aus dem sie nach unten durch eine Saugerleiste 64 abgekippt und durch eine Synchronbewegung der Saugerleiste 64 in Transportrichtung an die Greiferbalken 60 übergeben werden. Durch Blasluft kann der Nützenstapel aufgelockert werden, um Rolleffekte zu vermeiden. Die Vorschubsteuerung der in Schuppenformation vorliegenden Nutzen 1a erfolgt über Lichttaster 65.

Der von Nutzenzylinder 56 und Oberwalze 57 mit den Deckenpappen 1b zusammengefügte, zuvor beim Passieren einer Beleimeinrichtung 66 flächig beleimte Nutzen 1a wird oberhalb von Stützrollen 67 gemeinsam mit den Pappen 1b, 1c von Greifen 68 eines Kettensystems 69 synchron übernommen und in die Einschlagstation verbracht, wobei eine kontrollierte Verzögerung des Kettensystems 69 erfolgt. Über nicht dargestellte Stützleisten werden die Buchdecken auf Höhe gehalten, damit obere Sauger 70 die Buchdecke während des Stillstandes des Kettensystems 69 übernehmen können.

Durch einen Abwärtshub bringen die Sauger 70 die Buchdecke in die Kopf-und Fußeinschlagebene und legen sie auf ausgefahrene Druckschienen 71 ab. Während der Abwärtsbewegung erfolgt das Aufrichten der Kopf- und Fußeinschläge an ortsfesten Aufrichtschienen 73.

Einschlagschienen 72 vollführen danach nun den Kopf- und Fußeinschlag während die Sauger 70 wieder in ihre Ausgangsposition nach oben zurückkehren. Mit dem Kopf- und Fußeinschlag erfolgt das Eckeneinknicken über bekannte Eckeneinziehelemente.

Vor Abschluß des Kopf- und Fußeinschlags fahren untere Sauger 74 unter die Buchdecken, um diese nach Beendigung des Einschlags zu übernehmen und sie abwärts in die Seiteneinschlagebene zu transportieren, nachdem Druckschienen 71 und Einschlagschienen 72 zurückgezogen sind. Die Buchdecke wird auf seitliche Saugschienen 75 abgelegt, die zu diesem Zeitpunkt vorgeschoben sind und mit Saugern die Buchdecke halten. Über die Einschlagschiene 76 erfolgt nun der Seiteneinschlag, indem durch eine vertikale Bewegung der Einschlag aufgerichtet und durch eine darauffolgende horizontale Bewegung angerieben wird. Während der Einschlaghaltezeit weichen die Sauger 74 in Richtung Kopf und Fuß der Buchdecke aus dem Formatbereich aus, damit nach Zurückziehen der Saugschienen 75 und Einschlagschienen 76 die Buchdecke auf die Ausfuhrebene fallen kann. Die unteren Sauger 74 laufen nun mit einer schrägen Bewegung aufwärts in die Übernahmeposition der Kopf- und Fußeinschlagebene. Dabei wird durch Abweiser an den Saugern 74 die fertige Buchdecke zwangsläufig nach unten beschleunigt, damit der Transport in die Ausführebene nicht auf freien Fall angewiesen ist. Die Buchdecke fällt auf einen Auflagetisch 78 und wird dort durch eine konstant mit Taktgeschwindigkeit laufende Transportkette 79 in die Anrollstation 80 geschoben. Die unteren Sauger 74 führen eine Bewegung gemäß Pfeilrichtung aus, wozu sie über Antriebe 81 vertikal linear verfahrbar und horizontal verschwenkbar sind. Erfindungsgemäß werden auch in diese Ausführungsbeispiel einer Buchdeckenmaschine alle Funktionen innerhalb eines Taktes gleichzeitig an verschiedenen Buchdecken ausgeführt bzw. daß alle Arbeitsgänge in nacheinander folgenden Takten an einer Buchdecke vorgenommen werden.

## Patentansprüche

1. Buchdeckenmaschine mit Anlegestationen für die Deckenbezüge (1a) und Deckenpappen (1b, 1c), mit einer Beleimeinrichtung für die Deckenbezüge (1a), mit einer Einrichtung zum Zusammenfügen der Deckenbezüge (1a) und Deckenpappen (1b, 1c), mit Einschlagelementen (31-33, 35; 71-73) (37, 38; 75, 76) zum Umlegen des Kopf- und Fußeinschlags in einer ersten Ebene sowie zum Umlegen der Seiteneinschläge in einer vertikal versetzten, zweiten Ebene um die Kanten der Deckenpappen (1b, 1c), mit Mitteln zum Transportieren der mit den Deckenpappen (1b, 1c) vereinigten Deckenbezüge (1a) in den Wirkbereich der Einschlagelemente (31-33, 35; 71-73) (37, 38; 75, 76) und mit einer Einrichtung zum Verpressen der Deckenbezüge (1a) und Deckenpappen (1b, 1c), gekennzeichnet durch eine separat neben der Einrichtung zum Zusammenfügen der Deckenbezüge (1a) und Deckenpappen (1b, 1c) angeordnete Einschlagstation mit Einschlagelementen (31-33, 35; 71-73) zum Umlegen des Kopf- und Fußeinschlags in einer ersten Ebene und mit Einschlagelementen (37, 38; 75, 76) zum Umlegen der Seiteneinschläge in einer vertikal versetzten zweiten Ebene, durch horizontal verfahrbare Übergabetransportmittel (22-28; 68, 69) zum Verbringen der zusammengefügten Deckenbezüge (1a) und Deckenpappen (1b, 1c) in die Einschlagstation und durch vertikal verfahrbare Übernahmetransportmittel (29, 30, 36a, 36b; 70, 74, 81) zum Verbringen der zusammengefügten Deckenbezüge (1a) und Deckenpappen (1b, 1c) in den Wirkbereich der Einschlagelemente (31-33, 35; 71-73; 37, 38; 75, 76).

2. Buchdeckenmaschine nach Anspruch 1, dadurch gekennzeichnet, daß die Funktionen Zusammenfügen von Deckenbezüge (1a) und Deckenpappen (1b, 1c), Kopf- und Fußeinschlag sowie Seiteneinschlag derart aufeinander abgestimmt sind, daß alle Funktionen innerhalb eines Taktes gleichzeitig an verschiedenen Buchdecken (1a, 1b, 1c) erfolgen.

3. Buchdeckenmaschine nach Anspruch 1 oder 2, gekennzeichnet durch obere Übernahmetransportmittel (70; 29, 30) zum Verbringen der Deckenbezüge (1a) und Deckenpappen (1b, 1c) in die erste Einschlagebene und untere Übernahmetransportmittel (74, 81; 36a, 36b) zum Verbringen der Deckenbezüge (1a) und Deckenpappen (1b, 1c) aus der ersten Einschlagebene in die vertikal versetzte zweite Einschlagebene.

4. Buchdeckenmaschine nach Anspruch 1 bis 3, dadurch gekennzeichnet, daß die unteren Übernahmetransportmittel (74) über Antriebe (81) vertikal linear verfahrbar und horizontal schwenkbar sind.

5. Buchdeckenmaschine nach Anspruch 1 bis 3, gekennzeichnet durch einen um eine Horizontalachse (9) schwenkbaren Deckentisch (7), der mit eine zugeführten Deckenbezug (1a) aus einer zu den von einem Transportarm (14) gehaltenen Deckenpappen (1b, 1c) schräg verlaufenden Stellung in eine zu den Deckenpappen (1b, 1c) parallele Stellung unter fortschreitender Abnahme des von den Deckenpappen (1b, 1c) und dem Deckenbezug (1a) eingeschlossenen Winkels bei gleichzeitiger Abwärtsbewegung des Transportarmes (14) synchron zu der Schwenkbewegung des Deckentisches (7) überführbar ist.

6. Buchdeckenmaschine nach Anspruch 1-3, 5, dadurch gekennzeichnet, daß der Deckentisch (7) mit einer Auflage (8) aus einem elastischen Material versehen ist.

7. Buchdeckenmaschine nach Anspruch 1-3, 5-6, mit Einschlagschienen zum Aufrichten und Umlegen der Kopf- und Fußeinschläge, gekennzeichnet durch den Deckenbezug (1a) und die Deckenpappen (1b, 1c) in den seitennahen Bereichen haltende Saugschienen (29) mit diesen zugeordneten Druckschienen (31), die gemeinsam aus einer Ebene, in der Deckenpappen (1b, 1c) und Deckenbezug (1a) zugeführt werden, in eine vertikal nach unten versetzte Ebene fahrbar sind bis in eine Position, in der sich die Deckenpappen (1b, 1c) unmittelbar unterhalb der Einschlagschienen (35) befinden.

8. Buchdeckenmaschine nach Anspruch 1-3, 5-7, gekennzeichnet durch parallel zum Kopf- und Fußeinschlag angeordnete, über die Deckenlänge verteilte je aus zwei Teilstücken (36a, 36b) gebildete Saugleisten, die zwischen einer unteren Endstellung zum Umlegen der Seiteneinschläge und einer oberen Endstellung verfahrbar sind, wobei zur Übernahme der Decke (1) die Anordnung der einen Teilstücke (36a) bis zur Ebene des Kopf- und Fußeinschlags und die Anordnung der anderen Teilstücke (36b) bis zu einer Zwischenebene anhebbar sind und die Teilstücke (36a, 36b) die Decke (1) gemeinsam aus der Zwischenebene in die untere Endstellung überführen.

9. Buchdeckenmaschine nach Anspruch 1-3, 5-8, dadurch gekennzeichnet, daß die Transportmittel (22, 23) die Deckenpappen (1b, 1c) und den Deckenbezug (1a) auf einer Längsseite erfassen und die Deckenpappen (1b, 1c) und der Deckenbezug (1a) auf der gegenüberliegenden Längsseite von in die Bewegungsbahn und zurück verfahrbaren Stützschienen (24) unterfangen sind.

10. Buchdeckenmaschine nach Anspruch 1-3, 5-9, gekennzeichnet durch den in Einlaufrichtung betrachtet hinteren Kantenbereich des Deckenbezugs (1a) im Sinne eines Straffziehens beim Vortransport gegen den Deckentisch (7) drückende Niederhaltefinger (19).

11. Buchdeckenmaschine nach Anspruch 1-4, gekennzeichnet durch ein auf der dem Pappenmagazin (51) gegenüberliegenden Seite angeordnetes Deckenbezugsmagazin (63) und ein unterhalb der Einschlagstation verlaufendes Fördersystem (61) zwischen einem dem Pappenmagazin (51) zugeordneten Nutzenzylinder (56) und dem Deckenbezugsmagazin (63).

## Claims

1. Book cover machine with feeder stations for the cover coverings (1a) and cover boards (1b, 1c), with a glue-application arrangement for the cover coverings (1a), with an arrangement for assembling the cover coverings (1a) and cover boards (1b, 1c), with turn-in elements (31-33, 35; 71-73; 37, 38; 75, 76) for turning the head and foot turn-in flaps over the cover-board edges in a first plane, and for turning the lateral turn-in flaps over the cover board edges in a vertically displaced second plane, with means for transporting the cover coverings (1a), united with the cover boards (1b, 1c) into the region where the turn-in elements (31-33, 35; 71-73; 37, 38; 75, 76) operate, and with an arrangement for pressing the cover coverings (1a) and cover boards (1b, 1c), characterized by a turn-in station which is installed separately, beside the arrangement for assembling the cover coverings (1a) and cover boards (1b, 1c), said turn-in station having turn-in elements (31-33, 35; 71-73) for turning over the head and foot turn-in flaps in a first plane, and turn-in elements (37, 38; 75, 76) for turning over the lateral turn-in flaps in a vertically displaced second plane, by horizontally movable transport means (22-28; 68, 69) which have a transferring function, their purpose being to bring the cover coverings (1a) assembled with the cover boards (1b, 1c) into said turn-in station, and by vertically movable transport means (29, 30, 36a, 36b; 70, 74, 81) which have an acquiring function, their purpose being to bring the cover coverings (1a) assembled with the cover boards (1b, 1c) into the region where the turn-in elements (31-33, 35; 71-73; 37, 38; 75, 76) operate.

2. Book cover machine according to Claim 1, characterized in that the functions of assembling the cover coverings (1a) and cover boards (1b, 1c), of executing the head and foot turn-ins, and of executing the lateral turn-ins, are coordinated one with another, such that all functions within a cycle are performed on different book covers (1a, 1b, 1c) simultaneously.

3. Book cover machine according to Claim 1 or Claim 2, characterized by upper transport means (70; 29, 30) which have an acquiring function, their purpose being to bring the cover coverings (1a) and cover boards (1b, 1c) into the first turn-in plane, and lower transport means (74, 81; 36a, 36b) which have an acquiring function, their purpose being to transport the cover coverings (1a) and cover boards (1b, 1c) from the first turn-in plane and bring them into the vertically displaced second turn-in plane.

4. Book cover machine according to any one of Claims 1 to 3, characterized in that the lower transport means (74) which have an acquiring function can be caused to execute vertical linear movements and horizontal swinging movements through the agency of drive arrangements (81).

5. Book cover machine according to any of Claims 1 to 3, characterized by a cover table (7) which can be swung about a horizontal axle (9) and can be transferred, with a cover covering (1a) which has been supplied, from a position inclined to the cover boards (1b, 1c) which are held by a transport arm (14), to a position parallel with said cover boards (1b, 1c), and as this swinging movement occurs, the angle included by said cover boards (1b 1c, ) and the cover covering (1a) progressively diminishes and at the same time the transport arm (14) descends in synchronism with said swinging movement of the cover table (7).

6. Book cover machine according to any one of Claims 1 to 3, 5, characterized in that the cover table (7) is provided with a facing layer (8), composed of a resilient material.

7. Book cover machine according to any one of Claims 1 to 3, 5 to 6, with turn-in rails for turning up and turning over the head and foot turn-in flaps, characterized by suction rails (29) which hold the cover covering (1a) and the cover boards (1b, 1c) in the areas near the sides, and which have pressure rails (31) assigned to them, and these can together be moved from a plane in which the cover boards (1b, 1c) and cover covering (1a) are supplied, into a plane that is vertically displaced in the downward direction, as far as a position at which the cover boards (1b, 1c) are immediately below the turn-in rails (35).

8. Book cover machine according to any one of Claims 1 to 3, 5 to 7, characterized by suction rails which are each formed by two sections (36a, 36b), which are distributed over the cover length in an arrangement parallel with the head and foot turn-ins, and which are movable between a lower movement limit position, for turning over the lateral turn-in flaps, and an upper movement limit position, while in order to acquire the cover (1) the group comprising certain sections (36a) can be raised to the plane in which the head and foot turn-ins are executed, and the group comprising the other sections (36b) can be raised as far as an intermediate plane, and the sections (36a, 36b) together transfer the cover (1) from the intermediate plane to the lower movement limit position.

9. Book cover machine according to any one of Claims 1 to 3, 5 to 8, characterized in that the transport means (22, 23) grip the cover boards (1b, 1c) and the cover covering (1a) at a longitudinal side, and said cover boards (1b, 1c) and cover covering (1a) are supported from underneath, at the opposite longitudinal side, by supporting rails (24) which can be moved into the movement path and back again.

10. Book cover machine according to any one of Claims 1 to 3, 5 to 9, characterized by hold-down fingers (19) which press the rear edge area of the cover covering (1a), as viewed in the ingoing direction, against the cover table (7), so as to exert a tensioning effect during the forward transport.

11. Book cover machine according to any one of Claims 1 to 4, characterized by a cover covering magazine (63) which is located on the side opposite the board magazine (51), and a coveying system (61) which runs below the turn-in station, between the cover covering magazine (63) and a cloth cylinder (56) which is assigned to said board magazine (51).

## Revendications

1. Machine pour la fabrication de couvertures de livres comportant
- des stations d'alimentation en garnitures de couverture (1a) et en cartons de couverture (1b), (1c),
- un dispositif d'encollage pour les garnitures de couverture (1a),
- un dispositif pour assembler les garnitures (1a) et les cartons de couverture (1b), (1c),
- des éléments de rembordage (31 à 33, 35; 71 à 73) (37, 38; 75, 76) pour replier, dans un premier plan, les bords du haut et du bas de page et, dans un second plan décalé verticalement par rapport au premier, les bords latéraux autour des chants des cartons de couvertures (1b), (1c),
- des moyens pour transporter les garnitures (1a) assemblées avec les cartons de couvertures (1b), (1c) dans la zone de travail des éléments de rembordage (31 à 33, 35; 71 à 73) (37, 38; 75, 76), et
- un dispositif pour presser les garnitures (1a) et les cartons de couverture (1b), (1c),
*caractérisée par* une station de rembordage disposée séparément à côté du dispositif d'assemblage des garnitures (1a) avec les cartons de couvertures (1b), (1c), pourvue d'éléments de rembordage (31 à 33, 35; 71 à 73) pour replier, dans un premier plan, les bords du haut et du bas de page, et, d'éléments de rembordage (37, 38; 75, 76) pour replier, dans un second plan décalé verticalement par rapport au premier, les bords latéraux, *par* des moyens transporteurs déplaçables horizontalement (22 à 28; 68, 69) pour acheminer les garnitures (1a) assemblées avec les cartons de couverture (1b), (1c) jusqu'à la station de rembordage, et *par* à des moyens transporteurs déplaçables verticalement (29, 30, 36a, 36b; 70, 74, 81) pour acheminer les garnitures (1a) assemblées avec les cartons de couverture (1b), (1c) dans la zone de travail des éléments de rembordage (31 à 33, 35; 71 à 73; 37, 38; 75, 76).

2. Machine pour la fabrication de couvertures de livres selon la revendication 1 *caractérisée en ce que* les fonctions d'assemblage des garnitures (1a) avec les cartons de couverture (1b), (1c), de remordage du haut et du bas de page, et, de rembordage latéral, sont accordées les unes sur les autres de sorte que toutes les fonctions à l'intérieur d'une séquence de travail soient accomplies simultanément sur plusieurs couvertures de livres (1a), (1b), (1c).

3. Machine pour la fabrication de couvertures de livres selon les revendications 1 ou 2 *caractérisée par* des moyens transporteurs supérieurs (70; 29, 30) pour acheminer les garnitures (1a) et les cartons de couverture (1b), (1c) dans le premier plan de rembordage et *par* des moyens transporteurs inférieurs (74, 81; 36a, 36b) pour acheminer les garnitures (1a) et les cartons de couverture (1b), (1c) depuis le premier plan de rembordage dans un second plan de rembordage décalé verticalement par rapport au premier plan.

4. Machine pour la fabrication de couvertures de livres selon les revendications 1 à 3 *caractérisée en ce que* les moyens transporteurs inférieurs (74) sont déplaçables verticalement de manière linéaire et peuvent pivoter horizontalement grâce à des moyens d'entraînement (81).

5. Machine pour la fabrication de couvertures de livres selon les revendications 1 à 3 *caractérisée en ce que* une table (7) pour les couvertures articulée autour d'un axe horizontal (9), alimentée par une garniture (1a), peut pivoter depuis une position inclinée sur les cartons de couverture (1b), (1c) maintenus par un bras transporteur (14) dans une position parallèle aux cartons de couverture (1b), (1c) grâce à une diminution progressive de l'angle déterminé par le cartons de couverture (1b), (1c) et la garniture (1a) simultanément à un mouvement descendant du bras transporteur (14) et de manière synchrone au pivotement de la table pour les couvertures (7).

6. Machine pour la fabrication de couvertures de livres selon les revendications 1 à 3 et 5 *caractérisée en ce que* la table pour les couvertures (7) est pourvue d'un revêtement (8) en matériau élastique.

7. Machine pour la fabrication de couvertures de livres selon les revendications 1 à 3 et 5 à 6 avec des rails de rembordage pour redresser et replier les bords du haut et du bas de page *caractérisée par* des rails aspirants (29) maintenant la garniture (1a) et les cartons de couverture (1b), (1c) dans les zones proches de leur bord et coopérant avec des rails de pression (31), ces derniers et les rails aspirants (29) étant déplaçables ensemble d'un plan d'alimentation en cartons de couverture (1b), (1c) et en garniture (1a) dans un plan décalé verticalement vers le bas jusque dans une position dans laquelle les cartons de couverture (1b), (1c) se trouvent immédiatement en dessous des rails de rembordage (35).

8. Machine pour la fabrication de couvertures de livres selon les revendications 1 à 3 et 5 à 7 *caractérisée par* des ras aspirants constitués de deux parties (36a), (36b) parallèles aux bords du haut et du bas de page, répartis sur toute la longueur de la couverture, déplaçables entre une position extrême inférieure pour replier les bords latéraux et une position extrême supérieure, où en vue de la prise en charge de la couverture (1), les parties (36a) des rails aspirants peuvent être montées jusque dans le plan du rembordage du haut et du bas de page et les parties (36b) desdits rails aspirants peuvent être montées jusque dans un plan intermédiaire, les parties (36a), (36b) acheminant ensemble la couverture (1) depuis le plan intermédiaire jusque dans la position extrême inférieure.

9. Machine pour la fabrication de couvertures de livres selon les revendications 1 à 3 et 5 à 8 *caractérisée en ce que* les moyens transporteurs (22), (23) saisissent les cartons de couverture (1b), (1c) et la garniture (1a) par un côté longitudinal et *que* les cartons de couverture (1b), (1c) et la garniture (1a) sont soutenus sur le côté longitudinal opposé par des rails d'appui (24) avançant dans et reculant hors du chemin de déplacement.

10. Machine pour la fabrication de couvertures de livres selon les revendications 1 à 3 et 5 à 9 *caractérisée par* des doigts de pression disposés (19), dans le sens de l'alimentation, derrière le bord arrière de la garniture (1a) qu'ils appuient sur la table pour les couvertures (7) en vue de la maintenir tendue lors de l'avancement.

11. Machine pour la fabrication de couvertures de livres selon les revendications 1 à 4 *caractérisée par* un dépôt de garnitures (63) disposé sur le côté opposé au dépôt de cartons de couverture (51) et *par* un dispositif transporteur (61) disposé en dessous de la station de rembordage, entre le dépôt de garnitures (63) et un cylindre transporteur (56) coopérant avec le dépôt de cartons de couvertures (51).
